# EUROPEAN PATENT SPECIFICATION

(11) **EP 3 339 058 B1**
(45) Date of publication and mention of the grant of the patent: **14.10.2020**
(21) Application number: 17207488.2
(22) Date of filing: 14.12.2017
(51) Int. Cl.: B60C 15/00, B60C 9/00

(54) **PNEUMATIC TIRE**
LUFTREIFEN
PNEUMATIQUE

(30) Priority: 20.12.2016 US 201615384686
(43) Date of publication of application: 27.06.2018
(73) Proprietor: The Goodyear Tire & Rubber Company, Akron, OH 44316 (US)
(72) Inventor: SCHAUER, Etienne, 7723 Welsdorf (LU); LIONETTI, Robert Edward, 7227 Bereldange (LU); MANOGARAN, Arun Prasath, 7740 Colmar-Berg (LU); ERCEG, Boris, 63456 Hanau (DE); RAMANATHAN, Soundappan, 1518 Luxembourg (LU)
(74) Representative: Kutsch, Bernd

(56) References cited:
- EP-A1- 0 644 070
- EP-A1- 1 433 868
- EP-A2- 1 010 548
- EP-A2- 1 745 944
- WO-A1-97/14566
- US-A1- 2011 308 689
- US-A1- 2013 133 800

## Description

### Field of the Present Invention

The present invention relates to a pneumatic tire having a single carcass reinforced with high strength metallic cords.

### Background of the Invention

One conventional pneumatic tire includes a carcass ply having a main portion that extends between both bead cores of the tire and turnup portions that are anchored around each bead core. The radially outer edges of the turnup portions of the carcass ply are disposed radially outward of the bead cores a minimal distance and are in contact with the main portion of the carcass ply. Suitable elastomeric materials surround the bead core, carcass ply and other elastomeric components to complete the bead portion of the tire. A clamping member includes a strip of side-by-side cords of a heat shrinkable material embedded in a suitable elastomeric substance having a permanent thermal shrinkage of at least 2 percent. This strip of cords is extended from a location radially and axially inward of the bead core to a location radially outward of the bead core with no filler strip or apex disposed between the main portion and turnup portion of the carcass ply. The heat shrinkable material may be 1260/2 Nylon 6,6 having a permanent thermal shrinkage of 4 percent. It is a continual overriding goal to simplify the construction and reduce the expense of building tires, yet improve the durability, handling, rolling resistance, and other properties of the pneumatic tires.

Another conventional pneumatic tire has a pair of axially spaced annular bead cores and a single carcass ply which is folded about each bead core. Each bead core includes a plurality of wraps of a single metallic filament. The single carcass ply is reinforced with parallel metallic cords composed of at least one filament having a tensile strength of at least (-2000 × D + 4400 MPa) × 95%, where D is the filament diameter in millimeters. The single carcass ply is folded about each bead core. The single carcass ply has a main portion that extends between the bead cores and turnup portions that are folded around the bead cores. A radially outer edge of each turnup portion is in contact with the main portion of the carcass ply and extends to an end point 12.7 mm to 101.6 mm radially outward of the bead core, as measured along the main portion of the carcass ply of the tire. No bead apex or filler is present between the carcass turnup and the main portion of the carcass ply. A toe guard associated with each bead has each end (first and second) of the toe guard being disposed directly adjacent to the carcass ply. One (the first) end is located on the axially inner side of the main portion of the carcass ply at a location 10.16 mm to 88.9 mm radially outward of the bead core as measured along the main portion of the carcass ply. The other, or second, end of the toe guard is located at a point ranging from substantially the axially outermost point of the bead core to a location 88.9 mm radially outward of the bead core as measured along the turnup portion of the carcass ply. The first end and the second end of the toe guard is a shorter radial distance from said bead core than the end point of the turnup radial portion of the carcass ply. The respective turnup portion of the carcass ply is directly adjacent to both the toe guard and the bead core.

WO-A-97/14566 describes a pneumatic tire in accordance with the preamble of claim 1.

EP-A-0 644 070 describes a radial tire containing steel monofilament in the carcass ply. The steel monofilament has a tensile strength of at least 3650 MPa and a diameter in a range of from 0.1 to 0.22 mm.

EP-A-1 010 548 describes a pneumatic radial tire comprising high strength steel cord.

A further tire comprising a single carcass ply reinforced with steel cords is described in US-A-2011/0308689.

### Summary of the Invention

The invention relates to a tire in accordance with claim 1.

Dependent claims refer to preferred embodiments of the invention.

A pneumatic tire in accordance with a preferred aspect of the present invention includes a pair of beads each with an associated bead core and chafer, a single carcass ply folded about each bead so as to define a main body portion and a turnup portion associated with each bead, and a tread disposed radially outward from the single carcass ply, the tread having shoulder portions disposed at axial outer edges of the tread; and a pair of sidewalls extending radially outward from each chafer to a location adjacent each shoulder portion, each sidewall being disposed axially outward of the single carcass ply. The single carcass ply is reinforced with metallic cords, the metallic cords comprising steel filaments with diameters from 0.07 mm to 0.12 mm. The tire has an apex to stiffen the areas adjacent the bead cores and the tire has a chipper and/or a flipper to stiffen the areas adjacent the bead cores. According to yet another preferred aspect of the pneumatic tire, the bead cord has a radial cross-sectional shape selected from the group consisting of substantially pentagonal, hexagonal, rectangular, and circular.

According to still another preferred aspect of the pneumatic tire, the turnup portions are in contact with the main portion and extend to an end point radially outward of the bead core, as measured along the main portion of the single carcass ply.

According to yet another preferred aspect of the pneumatic tire, a toe guard is disposed on an axially inner side of the main portion of the single carcass ply at a location radially outward of the bead core.

According to still another preferred aspect of the pneumatic tire, an end of the toe guard is disposed at a point ranging from substantially the axially outermost point of the bead core to a location radially outward of the bead core, as measured along the turnup portion of the single carcass ply.

According to still another preferred aspect of the pneumatic tire, the filament diameter is in a range of from 0.10 mm to 0.12 mm.

In a pneumatic tire according to the present invention each steel filament has a tensile strength in MPa of at least (-2000 x D + 4900) as measured in accordance with ASTM D2969-04, wherein D is the filament diameter in mm.

According to still another preferred aspect of the pneumatic tire, the metallic cords comprise from 1 to 13 filaments, preferably 1 or from 4 to 8 filaments.

According to still another preferred aspect of the pneumatic tire, each steel filament has a total elongation of at least 2 percent, preferably from 2 percent to 4 percent or from 2.2 to 3 percent, over a gauge length of 25 cm as measured according to ASTM A370-92.

Also, a preferred method of manufacturing a pneumatic tire is provided. The method includes the steps of: folding a single carcass ply about a pair of beads so as to define a main body portion and a turnup portion associated with each bead; placing a tread radially outward from the single carcass ply; extending a pair of sidewalls radially outward from a pair of chafers to a location adjacent a shoulder portion of the tread; and reinforcing the single carcass ply with steel cords having filaments with diameters from 0.07 mm to 0.12 mm.

### Brief Description of the Drawings

The invention will be described by way of example and with reference to the accompanying drawings, in which:
FIG. 1 is a partial schematic cross-sectional view of a pneumatic tire in accordance with a comparative example; and
FIG. 2 is a schematic cross-sectional view of the bead portion of the pneumatic tire of FIG. 1 mounted upon a rim; and

### Definitions

The following definitions are controlling for the present invention.
"Apex" means an elastomeric filler located radially above the bead core and between the plies and the turnup ply.
"Axial" and "axially" are used herein to refer to lines or directions that are parallel to the axis of rotation of the tire.
"Bead" means that part of the tire comprising an annular tensile member wrapped by ply cords and shaped, with or without other reinforcement elements, such as flippers, chippers, apexes, toe guards, and chafers, to fit the design rim.
"Carcass" means the tire structure apart from the belt structure, tread, undertread, and sidewall rubber over the plies, but including the beads.
"Chipper" refers to a narrow band of fabric or steel cords located in the bead area whose function is to reinforce the bead area and stabilize the radially inwardmost part of the sidewall.
"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.
"Cord" means one of the reinforcement strands which the reinforcement structures of the tire comprise.
"Cord angle" means the acute angle, left or right in a plan view of the tire, formed by a cord with respect to the equatorial plane. The "cord angle" is measured in a cured but uninflated tire.
"Denier" means the weight in grams per 9000 meters (unit for expressing linear density). Dtex means the weight in grams per 10,000 meters.
"Density" or "Linear Density" means weight per unit length.
"Equatorial plane (EP)" means the plane perpendicular to the tire's axis of rotation and passing through the center of its tread; or the plane containing the circumferential centerline of the tread.
"Fiber" is a unit of matter, either natural or man-made that forms the basic element of filaments. Characterized by having a length at least 100 times its diameter or width.
"Filament count" means the number of filaments that make up a yarn. Example: 1000 denier polyester has approximately 190 filaments.
"Flipper" refers to a reinforcing fabric around the bead wire for strength and to tie the bead wire in the tire body.
"High Tensile Steel (HT)" means a carbon steel with a tensile strength of at least 3400 MPa at 0.2 mm filament diameter.
"LASE" is load at specified elongation.
"Lay length" means the distance at which a twisted filament or strand travels to make a 360 degree rotation about another filament or strand.
"Load Range" means load and inflation limits for a given tire used in a specific type of service as defined by tables in The Tire and Rim Association, Inc.
"Mega Tensile Steel (MT)" means a carbon steel with a tensile strength of at least 4500 MPa at 0.2 mm filament diameter.
"Normal Load" means the specific design inflation pressure and load assigned by the appropriate standards organization for the service condition for the tire.
"Normal Tensile Steel (NT)" means a carbon steel with a tensile strength of at least 2800 MPa at 0.2 mm filament diameter.
"Ply" means a cord-reinforced layer of rubber-coated radially deployed or otherwise parallel cords.
"Radial" and "radially" are used to mean directions radially toward or away from the axis of rotation of the tire.
"Rivet" means an open space between cords in a layer.
"Super Tensile Steel (ST)" means a carbon steel with a tensile strength of at least 3650 MPa at 0.2 mm filament diameter.
"Tenacity" is stress expressed as force per unit linear density of the unstrained specimen (gm/tex or gm/denier). This is used for textiles.
"Tensile" is stress expressed in forces/cross-sectional area. Strength in psi=12,800 times specific gravity times tenacity in grams per denier.
"Toe guard" refers to the circumferentially deployed elastomeric rim-contacting portion of the tire axially inward of each bead.
"Turnup end" means the portion of a carcass ply that turns upward (e.g., radially outward) from the beads about which the ply is wrapped.
"Ultra Tensile Steel (UT)" means a carbon steel with a tensile strength of at least 4000 MPa at 0.2 mm filament diameter.

### Detailed Description of Example Embodiments of the Present Invention

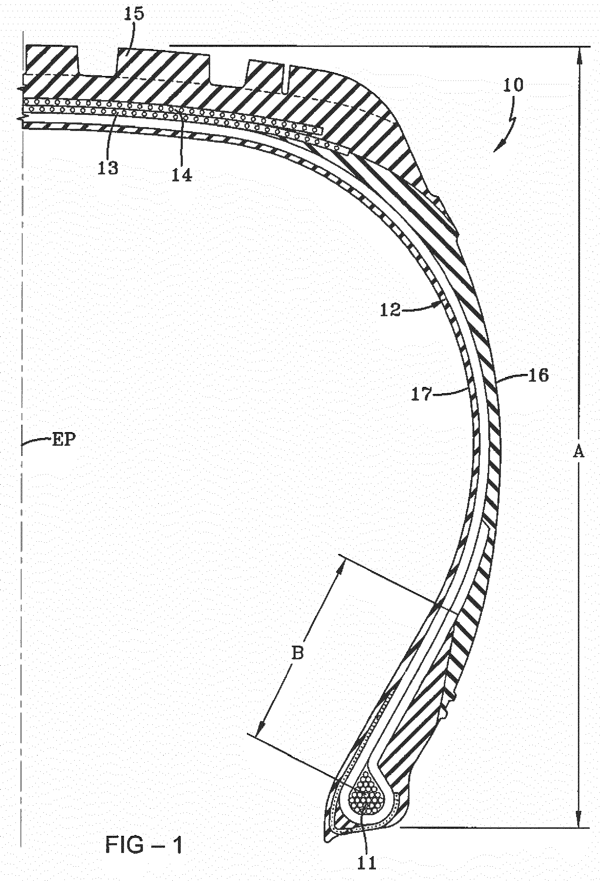

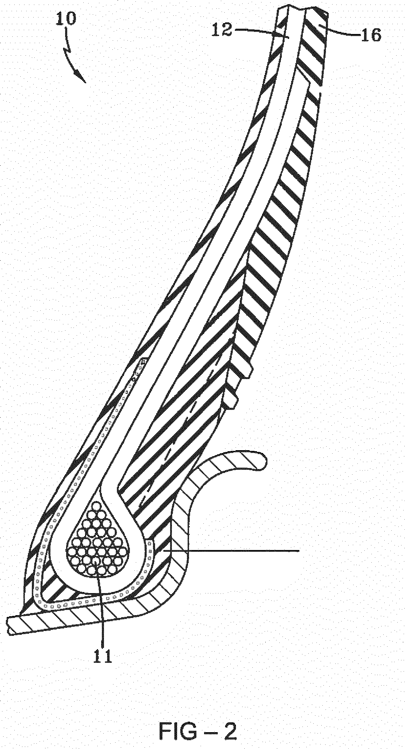

Referring now to FIGS. 1-2, there is shown a cross-sectional view of a pneumatic tire 10 and an enlarged fragmentary view of a bead portion and lower sidewall of the pneumatic tire 10 mounted upon a rim.

The pneumatic tire 10 has a pair of bead cores 11 (only one shown), each comprising a plurality of metallic filaments. The pneumatic tire 10 has a single carcass ply 12 extending between the bead cores 11 and a turnup portion anchored around each bead core 11. A belt structure is provided including preferably at least two belts 13, 14 disposed radially outward of the main portion of the carcass ply and a ground engaging tread portion 15 disposed radially outward of the belt structure. Sidewall portions 16 (one shown) extend radially inward from the tread portion 15 to the bead portions. On the axially inner side of the carcass ply 12, an air-impermeable innerliner 17 is used. The innerliner 17 may have a layer or layers of elastomer or other material that form an inside surface of the pneumatic tire 10 and contain the inflating fluid, such as air, within the pneumatic tire. Additional barriers, reinforcement strips, or gum strips (not shown) may be placed at suitable locations between the innerliner 17 and main portion of the carcass ply 12 to avoid penetration of rubber through the carcass ply, especially during curing of the pneumatic tire 10.

In accordance with the present invention, use of steel cords for reinforcing the carcass ply 12 in passenger tires may permit replacement of a conventional 2-ply fabric ply by a single steel-reinforced ply. The steel cords are preferably ultra-tensile steel with filament diameters less than 0.15 mm, i.e. 0.07 mm to 0.12 mm. Benefits of this replacement include increased durability, decreased weight, decreased rolling resistance, and/or decreased material cost and assembly time. Moreover, because of the higher stiffness of steel cords compared to polyester fabric, cornering stiffness may also be increased.

Table 1 below shows cost savings for some example steel cord constructions.

**Table 1:**

| Construction | Polyester 1440/2 | Steel 1+5x0.12 UT | Steel 3+8x0.10 UT | Steel 3+8x0.12 UT | Steel 3x0.11/9x0.10 UT |
|---|---|---|---|---|---|
| | | | | | |
| Breaking load (N) | 175 | 262 | 335 | 475 | 390 |
| Cord diameter (mm) | 0.64 | 0.36 | 0.42 | 0.5 | 0.42 |
| Linear density (g/m) | 0.31 | 0.53 | 0.69 | 0.99 | 0.79 |
| | | | | | |
| Number of plies | 2 | 1 | 1 | 1 | 1 |
| epi | 32 | 21 | 17 | 12 | 14 |
| Treatment gauge (mm) | 1.6 | 1.32 | 1.38 | 1.46 | 1.38 |
| | | | | | |
| ply cord weight (%) | 100 | 58 | 58 | 58 | 60 |
| Ply compound weight (%) | 100 | 46 | 45 | 45 | 44 |
| Treatment weight (%) | 100 | 59 | 59 | 60 | 63 |
| | | | | | |
| Treatment cost (%) | 100 | 71 | 79 | 70 | 87 |

One aspect of the present invention is the single ply carcass construction reinforced with parallel metallic cords composed of the above-described filaments. There are a number of metallurgical embodiments which result in the tensile strength defined above. One way of achieving such strength is by merging the proper process and alloys, as disclosed in US-A-4,960,473 and US-A-5,066,455, with a steel rod microalloyed with one or more of the following elements: Ni, Fe, Cr, Nb, Si, Mo, Mn, Cu, Co, V and B.

An example chemistry is listed below in weight percentages:
C 0.88 to 1.0
Mn 0.30 to 0.05
Si 0.10 to 0.3
Cr 0 to 0.4
V 0 to 0.1
Cu 0 to 0.5
Ni 0 to 0.5
Co 0 to 0.1
with the balance being iron and residuals. The resulting rod is then drawn to the appropriate tensile strength.

For equal filament diameters, the cords used in the present invention may have higher strength and generally higher fatigue life over conventional tensile cords. These advantages lead to pneumatic tires which have less reinforcement material and thus lower weight and cost. Further the life of the tire may be increased with the increase in fatigue life of the steel cord and its filaments. When cord structures incorporate filaments having a smaller diameter, there is a resulting reduction in gauge material and cost as compared with the high or super tensile strengths making the tires lighter in weight and less costly.

The cords for use in the single ply carcass ply 12 may comprise from one (monofilament) to multiple filaments. The number of total filaments in the cord may range from 1 to 13. The number of filaments per cord preferably range from 6 to 7. The individual diameter (D) of each filament generally ranges from 0.07 mm to 0.12 mm for each filament having at least a tensile strength of (-2000 x D + 4900), where D is the filament diameter in mm.

Another property of the steel cord may be the total elongation for each filament in the cord must be at least 2 percent over a gauge length of 25 cm. Total elongation may be measured according to ASTM A370-92. Total elongation of the cord may range from 2 percent to 4 percent or from 2.2 to 3.0.

The torsion values for the steel used in the cord may be at least 20 turns with a gauge length of 200 times the diameter of the filament wire. Generally, the torsion value ranges from 20 to 100 turns. The torsion values may range from 30 turns to 80 turns or from 35 turns to 65 turns. The torsion values are determined according to ASTM Test Method E 558-83 with test lengths of 200 times the diameter of the filament wire.

There are a number of example metallic cord constructions for use in the single carcass ply.

Representative examples may include 1 x, 2x, 3x, 4x, 5x, 6x, 7x, 8x, 11 x, 12x, 1+2, 1+4, 1+5, 1+6, 1+7, 1+8, 2+3+1, 5+1, 6+1, 11+1, 12+1, 2+7, 2+7+1, 3+8, 3+9, 1+5+1, 1+6+1, and/or 3+9+1. Preferred constructions are 1 +2, 2x, 1 +5, 3+8 and 3+9.

An outer wrap filament may have a tensile strength of 2500 MPa or greater based on a filament diameter of 0.15 mm. Other conventional constructions have included 3 x 0.18, 1+5 x 0.18, 1+6 x 0.18, 2+7 x 0.18, 2+7 x 0.18 x 1 x 0.15, 3+9 x 0.18+1 x 0.15, 3+9 x 0.18, 3 x 0.20+9 x 0.18, and 3 x 0.20+9 x 0.18+1 x 0.15.

The above cord designations are understandable to those skilled in the art. For example, a designation such as 2x, 3x, or 4x means a "bunch" of filaments; e.g., two filaments, three filaments, four filaments, etc. A designation such as 1+2 and 1+4 may indicate, for example, a single filament wrapped by two or four filaments.

The carcass ply 12 may have a layer of the above-described steel cords arranged so as to have from 5 to 70 ends per 2.54 cm, or 2 to 28 ends per cm, when measured at the equatorial plane of the tire. The layer of cords are arranged so as to have 7 to 20 ends per 2.54 cm, or 2.7 to 8.0 ends per cm) at the equatorial plane. The above calculations for ends per 2.54 cm are based upon the range of diameters for the cord, strength of the cord, and the practical strength requirement for the carcass ply 12. For example, the high number of ends per 2.54 cm may include the use of a lower diameter cord for a given strength versus a lower number of ends per 2.54 cm for a higher diameter filament wire for the same strength. Alternatively, if one elects to use a cord of a given diameter, one may use more or less ends per 2.54 cm depending on the strength of the cord. The metallic cords of the carcass ply 12 may be oriented such that a tire according to the present invention is termed a "radial". Example steel cords of the carcass ply 12 may intersect the equatorial plane (EP) of the tire at an angle in the range from 75 degrees to 105 degrees or from 82 degrees to 98 degrees or from 89 degrees to 91 degrees.

## Claims

1. A pneumatic tire comprising a pair of beads each with an associated bead core (11), a single carcass ply (12) folded about each bead core (11) so as to define a main body portion and a turnup portion associated with each bead, a tread (15) disposed radially outward from the single carcass ply (12), the tread (15) having shoulder portions disposed at axial outer edges of the tread (15), and a pair of sidewalls (16) extending radially outward from each bead to a location adjacent each shoulder portion, each sidewall (16) being disposed axially outward of the single carcass ply (12), **characterized in that** the single carcass ply (12) is reinforced with metallic cords comprising steel filaments having a filament diameter in a range of from 0.07 mm to 0.12 mm, **characterized in that** each steel filament has a tensile strength in MPa of at least (-2000 x D + 4900) as measured in accordance with ASTM D2969-04, wherein D is the filament diameter in mm, and **in that** the tire (10) further includes an apex and includes a chipper and/or a flipper.

2. The pneumatic tire as set forth in claim 1 wherein each turnup portion is in contact with the respective main portion and extends to an end point radially outward of the respective bead core (11), as measured along the respective main portion of the single carcass ply (12).

3. The pneumatic tire as set forth in at least one of the previous claims wherein each of the beads comprises a chafer.

4. The pneumatic tire as set forth in at least one of the previous claims wherein the filament diameter is in a range of from 0.10 mm to 0.12 mm.

5. The pneumatic tire as set forth in at least one of the previous claims wherein the metallic cords comprise from 1 to 13 filaments, preferably from 4 to 8 filaments.

6. The pneumatic tire as set forth in at least one of the previous claims wherein each steel filament has a total elongation of at least 2 percent, preferably from 2 percent to 4 percent or from 2.2 to 3 percent, over a gauge length of 25 cm as measured according to ASTM A370-92.

## Patentansprüche

1. Luftreifen, umfassend ein Paar Wülste mit jeweils einem zugehörigen Wulstkern (11), eine einzelne Karkassenlage (12), die um jeden Wulstkern (11) herum gefaltet ist, um einen Hauptkörperabschnitt und einen jedem Wulst zugehörigen Umschlagabschnitt zu definieren, eine Lauffläche (15), die von der einzelnen Karkassenlage (12) radial nach außen angeordnet ist, wobei die Lauffläche (15) Schulterabschnitte aufweist, die an axialen Außenkanten der Lauffläche (15) angeordnet sind, und ein Paar Seitenwände (16), die sich von jedem Wulst zu einer Stelle angrenzend an jedem Schulterabschnitt radial nach außen erstrecken, wobei jede Seitenwand (16) von der einzelnen Karkassenlage (12) axial nach außen angeordnet ist, **dadurch gekennzeichnet, dass** die einzelne Karkassenlage (12) mit Metallkorden verstärkt ist, die Stahlfilamente umfassen, die einen Filamentdurchmesser in einem Bereich von 0,07 mm bis 0,12 mm aufweisen, **dadurch gekennzeichnet, dass** jedes Stahlfilament eine Zugfestigkeit in MPa von wenigstens (-2000 × D + 4900), gemessen gemäß ASTM D2969-04, aufweist, wobei D der Filamentdurchmesser in mm ist, und dadurch, dass der Reifen (10) ferner einen Kernreiter einschließt und eine Wulstverstärkung und/oder eine Wulstfahne einschließt.

2. Luftreifen nach Anspruch 1, wobei jeder Umschlagabschnitt in Kontakt mit dem jeweiligen Hauptabschnitt ist und sich zu einem Endpunkt radial außerhalb des jeweiligen Wulstkerns (11), gemessen entlang des jeweiligen Hauptabschnitts der einzelnen Karkassenlage (12), erstreckt.

3. Luftreifen nach wenigstens einem der vorhergehenden Ansprüche, wobei jeder der Wülste ein Wulstband umfasst.

4. Luftreifen nach wenigstens einem der vorhergehenden Ansprüche, wobei der Filamentdurchmesser in einem Bereich von 0,10 mm bis 0,12 mm liegt.

5. Luftreifen nach wenigstens einem der vorhergehenden Ansprüche, wobei die Metallkorde von 1 bis 13 Filamente, vorzugsweise von 4 bis 8 Filamente, umfassen.

6. Luftreifen nach wenigstens einem der vorhergehenden Ansprüche, wobei jedes Stahlfilament eine Gesamtdehnung von wenigstens 2 Prozent, vorzugsweise von 2 bis 4 Prozent oder von 2,2 bis 3 Prozent, über eine Messlänge von 25 cm, gemessen nach ASTM A370-92, aufweist.

## Revendications

1. Bandage pneumatique qui comprend une paire de talons, chacune comprenant une tringle de talon (11) qui lui est associée, une nappe de carcasse unique (12) qui est enroulée autour de chaque tringle de talon (11) de façon à définir une portion principale faisant office de corps et une portion faisant office de retournement vers le haut associée à chaque talon, une bande de roulement (15) qui est disposée dans la direction radiale à l'extérieur de la nappe de carcasse unique (12), la bande de roulement (15) possédant des portions faisant office d'épaulements qui sont disposées à des bords externes axiaux de la bande de roulement (15), et une paire de flancs (16) qui s'étendent dans la direction radiale à l'extérieur de chaque talon jusqu'à un endroit situé en position adjacente à chaque portion faisant office d'épaulement, chaque flanc (16) étant disposé dans la direction axiale à l'extérieur de la nappe de carcasse unique (12), **caractérisé en ce que** la nappe de carcasse unique (12) est renforcée avec des câblés métalliques comprenant des filaments en acier qui possèdent un diamètre de filament qui se situe dans une plage de 0,07 mm à 0,12 mm, **caractérisé en ce que** chaque filament en acier possède une résistance à la traction que l'on exprime en MPa d'au moins (-2000 x D + 4900), telle qu'on la mesure en conformité avec la norme ASTM D2969-04 ; dans lequel D représente le diamètre du filament en mm, et **en ce que** le bandage pneumatique (10) englobe en outre un bourrage sur tringle et englobe un renfort d'appui et/ou une protection de tringle.

2. Bandage pneumatique tel qu'indiqué à la revendication 1, dans lequel chaque portion faisant office de retournement vers le haut entre en contact avec la portion principale respective et s'étend jusqu'à un point terminal qui est disposé dans la direction radiale à l'extérieur de la tringle de talon respective (11), comme on le mesure le long de la portion principale respective de la nappe de carcasse unique (11).

3. Bandage pneumatique tel qu'indiqué dans au moins une des revendications précédentes, dans lequel chacun des talons comprend une bandelette talon.

4. Bandage pneumatique tel qu'indiqué dans au moins une des revendications précédentes, dans lequel le diamètre des filaments se situe dans une plage de 0,10 mm à 0,12 mm.

5. Bandage pneumatique tel qu'indiqué dans au moins une des revendications précédentes, dans lequel les câblés métalliques comprennent de 1 à 13 filaments, de préférence de 4 à 8 filaments.

6. Bandage pneumatique tel qu'indiqué dans au moins une des revendications précédentes, dans lequel chaque filament en acier possède un allongement total qui s'élève à au moins 2 %, de préférence qui représente de 2 % à 4 % ou de 2,2 à 3 %, sur une longueur de référence de 25 cm, telle qu'on la mesure en conformité avec la norme ASTM A370-92.
